# EUROPEAN PATENT SPECIFICATION

(11) **EP 4 048 906 B1**
(45) Date of publication and mention of the grant of the patent: **29.05.2024**
(21) Application number: 19794989.4
(22) Date of filing: 25.10.2019
(51) Int. Cl.: F16B 7/04, F16B 21/18

(54) **ADAPTER FOR COUPLING POLE WITH INTERCHANGEABLE HEADS**
ADAPTER FÜR KUPPLUNGSSTANGE MIT AUSWECHSELBAREN KÖPFEN
ADAPTATEUR POUR COUPLER UN POTEAU À DES TÊTES INTERCHANGEABLES

(43) Date of publication of application: 31.08.2022
(73) Proprietor: HUSQVARNA AB, 561 82 Huskvarna (SE)
(72) Inventor: RAUCH, Martin, 70191 Stuttgart (DE)
(74) Representative: Finkele, Rolf
(86) International application number: PCT/EP2019/079193
(87) International publication number: WO 2021/078393

(56) References cited:
- WO-A1-02/089631
- US-A- 4 027 150
- US-A- 5 749 386
- US-A1- 2006 018 708

## Description

### TECHNICAL FIELD

The present disclosure relates to an interchangeable mount system typically used for indoor as well as outdoor applications, and more particularly to interchangeable heads which can be mounted on a pole of the mount system.

### BACKGROUND

People are increasingly moving towards innovative mounting systems for lighting and decorative mounting typically for indoor applications. This trend warrants better use of technology to have various improvements in the mount system to the very basic level of surface mounted poles and associated interchangeable heads. However, there have been constraints regarding proper and secure assembly and disassembly of the interchangeable heads with the poles, particularly for applications involving a common user.

An example of a pole and interchangeable head system is disclosed by US20170089509A1 (hereinafter '509 reference). The '509 reference discloses an interchangeable ground mount system which includes a ground mount, at least one post segment, and an interchangeable head. A variety of interchangeable heads can be mounted to one or more post segments, which are inserted into a semipermanently installed ground mount. However, the '509 reference seems less likely to address assembly and disassembly issues faced by the common user, such as for ease of changing the interchangeable heads. Another assembly is known from US 2006/018708 A1.

Thus, there is a need for improvements related to pole and interchangeable heads which inherently allows better application of different interchangeable heads with the pole.

### SUMMARY

In view of the above, it is an objective of the present invention to solve or at least reduce the drawbacks discussed above. The objective is at least partially achieved by an assembly according to claim 1 which comprises a pole, one or more interchangeable heads and an adaptor. The adaptor finds application for coupling a pole with one or more interchangeable heads. The adaptor has a first end and a second end and a body portion in between. The adaptor is associated with at least one of the pole and one of the one or more interchangeable heads. The first end has a mounting seat mounting the adaptor with at least one of the pole and one of the one or more interchangeable heads. The second end has a female coupling member. The adaptor is characterized in that the adaptor is formed as the female coupling member that includes a sleeve movably mounted on the body portion. A movement of the sleeve allows a locking contour to selectively decouple and non-removably couple the pole and one of the one or more interchangeable heads. Thus, the present disclosure provides a simple, convenient and user-friendly mounting of different interchangeable heads with the pole by application of the adaptor of the present disclosure.

According to the present invention, coupling the pole and one of the one or more interchangeable heads involves coupling of the female coupling member with a male coupling member. The male coupling member includes at least one indent or at least one protrusion adapted to selectively couple the locking contour.

According to an embodiment of the present invention, a pole is associated with the adaptor according to the present disclosure, where at least one of the one or more interchangeable heads includes the male coupling member.

According to an embodiment of the present invention, an interchangeable head is associated with the adaptor according to the present disclosure, where the pole includes the male coupling member.

According to an embodiment of the present invention, one of the one or more interchangeable heads is a lighting fixture. Similarly, one of the one or more interchangeable heads is a decorative item, or any other mounting as used or known in the art. Further, option of the interchangeable heads makes the pole and the interchangeable heads of the present disclosure applicable for various indoor and outdoor applications.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a pole along with an adaptor having a female coupling member, in accordance with an embodiment of the present invention;
**FIG. 2** shows a perspective view of the pole and the adaptor before coupling with an interchangeable head having a male coupling member, in accordance with an embodiment of the present invention;
**FIG. 3** shows a perspective view of the pole and the adaptor ready for coupling with the interchangeable head, in accordance with an embodiment of the present invention;
**FIG. 4** shows a perspective view of the interchangeable head in place for coupling after the step of **FIG. 3****,** in accordance with an embodiment of the present invention;
**FIG. 5** shows a perspective view of the pole and the adaptor of **FIG. 3** coupled with the interchangeable head having the male coupling member, in accordance with an embodiment of the present invention;
**FIG. 6** shows a perspective view of the pole having the male coupling member ready for coupling with the interchangeable head having the female coupling member, in accordance with another embodiment of the present invention;
**FIG. 7** shows a perspective view of the interchangeable head in place for coupling after the step of **FIG. 6****,** in accordance with another embodiment of the present invention; and
**FIG. 8** shows a perspective view of the pole of **FIG. 6** coupled with the interchangeable head having the female coupling member, in accordance with another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

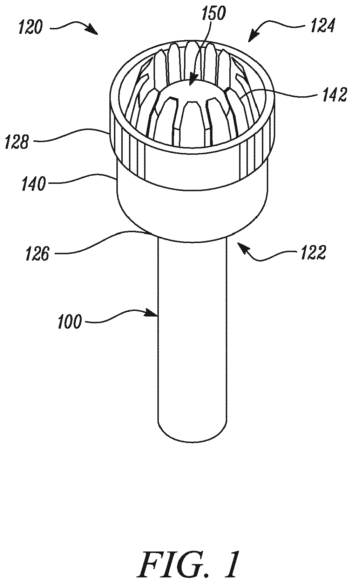

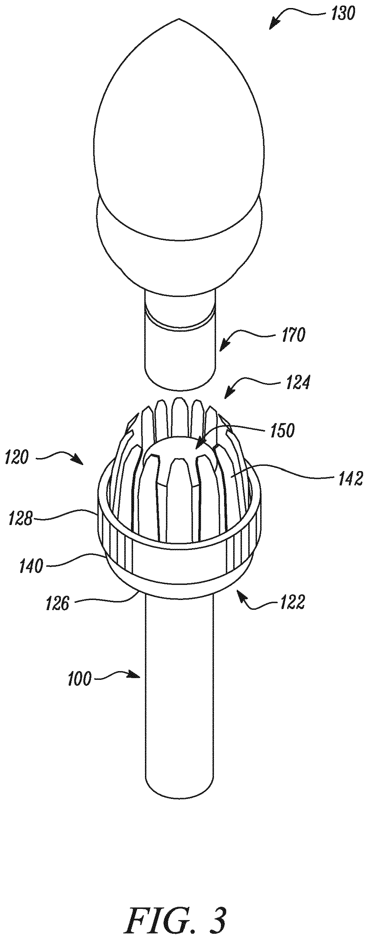

**FIG. 1** illustrates a pole **100** which can be removably mounted in a surface such as for indoor and outdoor applications. The present disclosure illustrates various embodiments of the pole **100,** however it may be readily implemented with any pole or rod-like element which is capable of mounting one or more interchangeable heads **130** (shown in **FIG. 3**). The interchangeable heads **130** can belong to any application for the indoor and outdoor applications such as, but need not necessarily, decorative elements, light fixtures, markers among others.

As illustrated, the pole **100** is cylindrical shaped and removably mounted in/on ground, fixed to a stand, a balustrade or any other surface (not shown). The pole **100** includes an adaptor **120** having a first end **122** and a second end **124.** The first end **122** has a mounting seat **126** mounting the adaptor **120** with the pole **100.** The adaptor **120** can be mounted with the pole **100** by means of threads, welding, press-fit or any semi-permanent or permanent means as used or known in the art. The second end **124** has at least one of a male coupling member **170,** and a female coupling member **150,** while the present figure illustrates the adaptor **120** having the female coupling member **150.** The adaptor **120** further includes a body portion **140** defining an outer surface of the adaptor **120.** Moreover, the adaptor **120** is formed as the female coupling member **150** that includes a sleeve **128** movably mounted on the body portion **140.** The sleeve **128** can be a ring-like element disposed circumferentially around the body portion **140** of the adaptor **120.** The sleeve **128** can be engaged when a user places fingers, say around diametrically opposite ends of the sleeve **128** whenever the sleeve **128** is to be moved in between the first end **122** and the second end **124.**

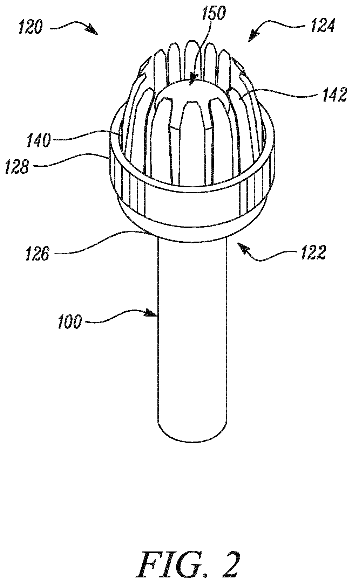

In some embodiments, the sleeve **128** can be movably mounted on threads (not shown) provided on the body portion **140** of the adaptor **120,** or by any other means used or known in the art. In the present figure, the sleeve **128** is moved to the second end **124** to bias the locking contours **142** whenever the adaptor **120** is setup for receiving the male coupling member **170** of the interchangeable head **130** of the present embodiment. As illustrated in **FIGS. 2****,** **3****,** movement of the sleeve **128** towards the first end **122** sets up the locking contours **142** of the adaptor **120** to allow desired engagement with the male coupling member **170** of to the interchangeable head **130.** In some embodiments, the pole **100,** the adaptor **120,** the sleeve **128** can be made of a plastic, metal, composite or any other material as known or used in the art.

In the present invention, coupling the pole **100** and one of the one or more interchangeable heads **130** involves coupling of the female coupling member **150** with the male coupling member **170.** The male coupling member **170** includes at least one indent **152** or at least one protrusion **152** adapted to selectively couple the locking contour **142.**

According to an embodiment of the present invention, the pole **100** is associated with the adaptor **120** according to the present disclosure, where at least one of the one or more interchangeable heads **130** includes the male coupling member **170.**

According to an embodiment of the present invention, the interchangeable head **130** is associated with the adaptor **120** according to the present disclosure, where the pole **100** includes the male coupling member **170.**

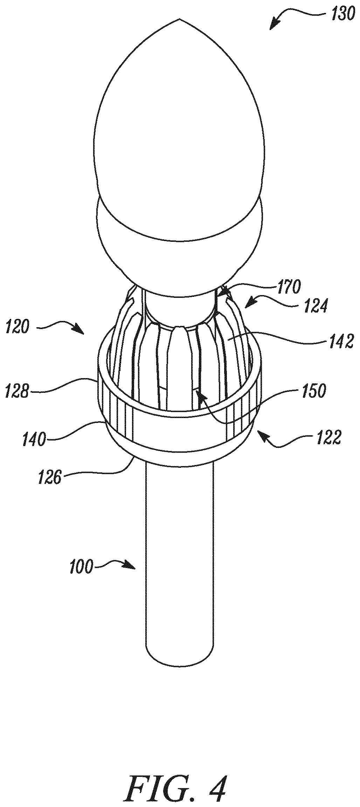

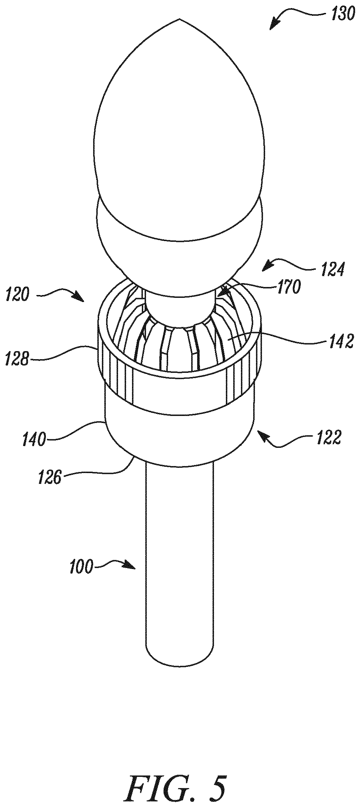

The locking contour(s) **142** are typically claw-like elements which allow insertion of the male coupling member **170** within the body portion **140** of the adaptor **120.** The locking contours **142** can be typically held in place and biased when the sleeve **128** is positioned towards the second end **124.** In some embodiments, the locking contours **142** can be made of a material which allows ease of biasing of the locking contours **142** to ensure ease of assembly of the interchangeable head **130** as illustrated in **FIGS. 4****,** **5****.** For similar reasons, the locking contours **142** can be made of a plastic, rubber, composite or any other material as used or known suitable for the purpose detailed by the present disclosure.

Further as illustrated in **FIG. 5****,** movement of the sleeve **128** towards the second end **124** of the adaptor **120** allows biasing (or say locking) of the locking contours **142** against the male coupling member **170** to lock the interchangeable head(s) **130** with the pole **100.** This ensures desired coupling of the interchangeable head **130** with the pole **100** and prevents any inadvertent decoupling of the interchangeable head **130** from the pole **100.** Moreover, in order to change or replace the interchangeable head **130,** the sleeve **128** needs to be moved towards the first end **122** as illustrated in **FIG. 4****,** and the whole process needs to the repeated in reverse order till **FIG. 2****.**

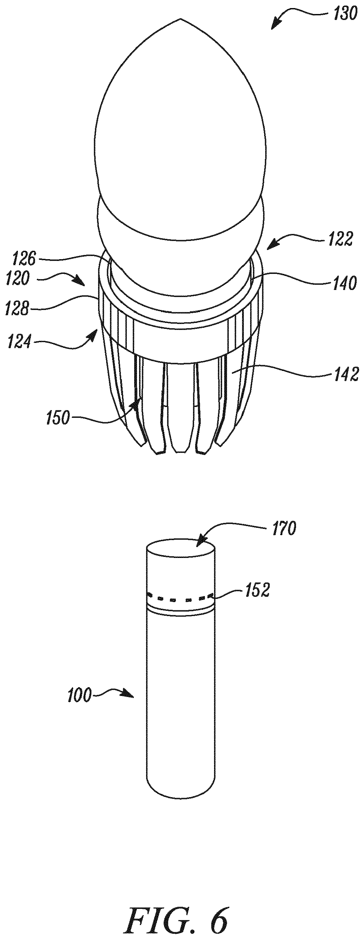

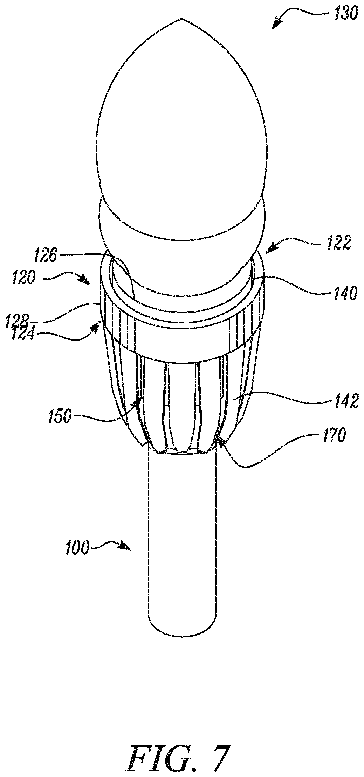

**FIGS. 6****,** **7** illustrate embodiments where the adaptor **120** is attached with the interchangeable head **130.** In particular, **FIG. 6** illustrates the pole **100** which includes the male coupling member **170** while the interchangeable head **130** includes the adaptor **120** and the female coupling member **150.** The male coupling member **170** includes at least one indent **152** or at least one protrusion **152** which are disposed around periphery of the male coupling member **170.** The indent **152** or the protrusion **152** are adapted to selectively couple the locking contour **142** with the male coupling member **170** of the interchangeable head **130.** The indent **152** or the protrusion **152** are provided on the male coupling member **170** to ensure secure coupling of the locking contour **142** of the adaptor **120** with the indent **152** or the protrusion **152** of the male coupling member **170.**

Referring to **FIGS. 3****,** **6****,** the adaptor **120** is illustrated as coupled with the pole **100** and one of the one or more interchangeable heads **130** respectively. The adaptor **120** has the first end **122** and the second end **124** and the body portion **140** in between. The adaptor **120** can be associated with at least one of the pole **100** and one of the one or more interchangeable heads **130** which increases the application of the adaptor **120** for different indoor as well as outdoor applications (say balcony, terrace and the like). For mounting purposes, the first end **122** has the mounting seat **126** mounting the adaptor **120** with at least one of the pole **100** and one of the one or more interchangeable heads **130.** The second end **124** has the female coupling member **150.** Further, at least one of the pole **100** and one of the one or more interchangeable heads **130** not associated with the adaptor **120** includes the male coupling member **170.** The adaptor **120** includes the sleeve **128** movably mounted on the body portion **140.** During implementation, a movement of the sleeve **128** allows the locking contour **142** to selectively decouple and non-removably couple the pole **100** and one of the one or more interchangeable heads **130.** As illustrated in **FIG. 6****,** the pole **100** further includes the at least one indent **152** or the at least one protrusion **152** adapted to selectively couple the locking contour **142** with the male coupling member **170** of the pole **100.**

Coupling the pole **100** and one of the one or more interchangeable heads **130** involves coupling of the female coupling member **150** of the adaptor **120** with the male coupling member **170.**

In some embodiments, one of the one or more interchangeable heads **130** is a lighting fixture. Similarly, one of the one or more interchangeable heads **130** is a decorative item, or any other mounting as used or known in the art. Further, option of the interchangeable heads **130** makes the pole **100** and the interchangeable heads **130** of the present disclosure applicable particularly for various indoor and outdoor applications.

The pole **100** can be associated with the adaptor **120** as illustrated in **FIGS. 1-5** of the present disclosure. More particularly, the pole **100** is coupled with the mounting seat **126** of the adaptor **120,** where the female coupling member **150** of the pole **100** couples with the male coupling member **170** of the one or more interchangeable heads **130.**

The interchangeable head **130** can be associated with the adaptor **120** as illustrated in **FIGS. 6-8** of the present disclosure. More particularly, the interchangeable head **130** is coupled with the mounting seat **126** of the adaptor **120,** where the female coupling member **150** of the interchangeable head **130** couples with the male coupling member **170** of the pole **100.**

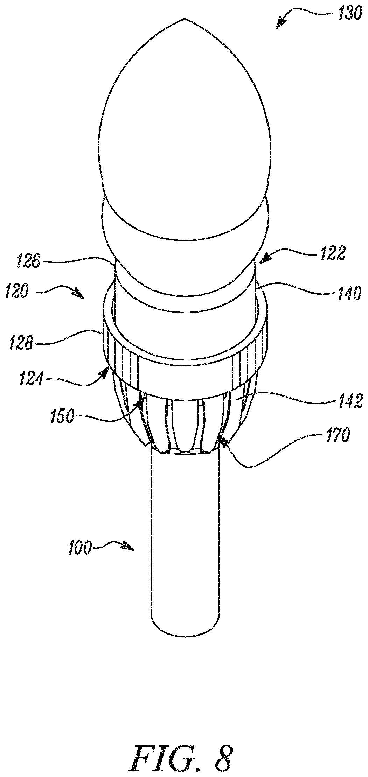

Referring again to **FIG. 6****,** the adaptor **120** is illustrated with the female coupling member **150.** The male coupling member **170** includes the at least one indent **152** or the at least one protrusion **152** adapted to selectively couple the locking contours **142** with the male coupling member **170** of the pole **100** as illustrated in **FIG. 7****.** The interchangeable head **130** has the locking contour **142** of the adaptor **120** fully engaged with the indent **152** or protrusion **152** of the male coupling member **170** to allow secure mating with the male coupling member **170** of the pole **100** as best illustrated in **FIGS. 7****,** **8****.** In some embodiments, any of the male coupling member **170** and the female coupling member **150** can have only one or both of the indent **152/**protrusion **152** and the sleeve **128,** or a combination thereof, so as to have desired mating/locking of the male coupling member **170** and the female coupling member **150.**

**FIG. 7** illustrates the interchangeable head **130** in place for coupling with the male coupling member **170** while the sleeve **128** is disposed on the body portion **140** around the first end **122.** As will be appreciated by **FIGS. 6****,** **7****,** the locking contour(s) **142** have substantial gaps between them to allow desired engagement of the male coupling member **170** of the pole **100** with the female coupling member **150** of the adaptor **120.** Further, a movement of the sleeve **128** towards the second end **124,** as illustrated by **FIG. 8****,** biases the locking contour **142** to selectively lock with the male coupling member **170** of the pole **100.** This completes the locking of the pole **100** and the interchangeable head **130.** In particular, movement of the sleeve **128** towards the second end **124** biases the locking contours **142.** Moreover, this biasing of the locking contour **142** by the sleeve **128** and presence of the indent **152** or protrusion **152** allows for a secure and tight coupling of the interchangeable head **130** with the adaptor **120** of the pole **100.**

In some embodiments, the one or more interchangeable heads **130** are lighting fixtures, decorative items or any other interchangeable mounting as used or known in the art. Further, different embodiments of the present disclosure illustrate similar male and female coupling members **150, 170** being interchangeably attached to the interchangeable head **130** and the pole **100** as illustrated by **FIGS. 3****,****6****.** However, actual implementation of the present disclosure may have similar or different type, number, dimension, placement of male and female coupling members with the pole **100** and the interchangeable head **130,** and all such variations are well within the scope of the present disclosure.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Pole
- 120: Adaptor
- 122: First End
- 124: Second End
- 126: Mounting Seat
- 128: Sleeve
- 130: Interchangeable Heads
- 140: Body Portion
- 142: Locking Contour
- 150: Female Coupling Member
- 152: Indent/Protrusion
- 170: Male Coupling Member

## Claims

1. An assembly comprising:
a pole (**100**);
one or more interchangeable heads (**130**); and
an adaptor (**120**), the adaptor (**120**) being suitable for coupling the pole (**100**) with the one or more interchangeable heads (**130**), the adaptor (**120**) comprising:
a first end (**122**), a second end (**124**) and a body portion (**140**) in between, the adaptor (**120**) includes a sleeve (**128**);
wherein the adaptor (**120**) can be associated with at least one of the pole (**100**) and one of the one or more interchangeable heads (**130**), and
wherein the first end (**122**) has a mounting seat (**126**) capable of mounting the adaptor (**120**) with at least one of the pole (**100**) and one of the one or more interchangeable heads (**130**), and the second end (**124**) has a female coupling member (**150**);
wherein
the pole (**100**) is removably mountable in/on ground, fixable to a stand, a balustrade or any other surface;
the sleeve (**128**) is movably mounted on the body portion (**140**),
the adaptor (**120**) comprises a locking contour (**142**), wherein a movement of the sleeve (**128**) allows biasing of the locking contour (**142**) to selectively decouple and non-removably couple the pole (**100**) and one of the one or more interchangeable heads (**130**); and
wherein coupling the pole (**100**) and one of the one or more interchangeable heads (**130**) involves coupling of the female coupling member (**150**) with a male coupling member (**170**), where the male coupling member (**170**) includes at least one indent (**152**) or at least one protrusion (**152**) adapted to selectively couple the locking contour (**142**), and
wherein one of the one or more interchangeable heads (**130**), or the pole (**100**) includes the male coupling member (**170**).

2. The assembly of claim **1,** wherein one of the one or more interchangeable heads (**130**) is a lighting fixture.

3. The assembly of claim **1,** wherein one of the one or more interchangeable heads (**130**) is a decorative item.

## Patentansprüche

1. Baugruppe, umfassend:
eine Stange **(100)**;
einen oder mehrere auswechselbare Köpfe **(130)**; und
einen Adapter **(120),** wobei der Adapter **(120)** geeignet ist, die Stange **(100)** mit dem einen oder den mehreren auswechselbaren Köpfen **(130)** zu kuppeln, wobei der Adapter **(120)** umfasst:
ein erstes Ende **(122),** ein zweites Ende **(124)** und einen Körperabschnitt **(140)** dazwischen, wobei der Adapter **(120)** eine Hülse **(128)** einschließt;
wobei der Adapter **(120)** mit mindestens einem der Stange **(100)** und einem der ein oder mehreren auswechselbaren Köpfe **(130)** verbunden werden kann, und
wobei das erste Ende **(122)** einen Montagesitz **(126)** aufweist, der in der Lage ist, den Adapter **(120)** mit mindestens einem von der Stange **(100)** und einem der ein oder mehreren auswechselbaren Köpfe **(130)** zu montieren, und das zweite Ende **(124)** ein weibliches Kupplungselement **(150)** aufweist;
wobei die Stange **(100)** abnehmbar im/am Boden montierbar ist, an einem Ständer, einer Balustrade oder einer anderen Oberfläche befestigbar ist;
die Hülse **(128)** beweglich auf dem Körperteil **(140)** montiert ist,
der Adapter **(120)** eine Verriegelungskontur **(142)** umfasst, wobei eine Bewegung der Hülse **(128)** ein Vorspannen der Verriegelungskontur **(142)** ermöglicht, um die Stange **(100)** und einen des einen oder der mehreren auswechselbaren Köpfe **(130)** selektiv zu entkuppeln und unlösbar zu kuppeln; und
wobei das Kuppeln der Stange **(100)** und eines der einen oder mehreren auswechselbaren Köpfe **(130)** das Kuppeln des weiblichen Kupplungselements **(150)** mit einem männlichen Kupplungselement **(170)** beinhaltet, wobei das männliche Kupplungselement **(170)** mindestens eine Einbuchtung **(152)** oder mindestens einen Vorsprung **(152)** einschließt, die/der geeignet ist, die Verriegelungskontur **(142)** selektiv zu kuppeln, und
wobei einer der ein oder mehreren auswechselbaren Köpfe **(130)** oder die Stange **(100)** das männliche Kupplungselement **(170)** einschließt.

2. Baugruppe nach Anspruch **1,** wobei einer der ein oder mehreren auswechselbaren Köpfe **(130)** eine Beleuchtungseinrichtung ist.

3. Baugruppe nach Anspruch **1,** wobei einer der ein oder mehreren auswechselbaren Köpfe **(130)** ein dekoratives Element ist.

## Revendications

1. Ensemble comprenant :
un pôle **(100)** ;
une ou plusieurs têtes interchangeables **(130)** ; et
un adaptateur **(120),** l'adaptateur **(120)** étant apte à accoupler le pôle **(100)** avec les une ou plusieurs têtes interchangeables **(130),** l'adaptateur **(120)** comprenant :
une première extrémité **(122),** une seconde extrémité **(124)** et une partie de corps **(140)** entre eux, l'adaptateur **(120)** comporte un manchon **(128)** ;
dans lequel l'adaptateur **(120)** peut être associé à au moins un du pôle **(100)** et une des une ou plusieurs têtes interchangeables **(130),** et
dans lequel la première extrémité **(122)** a un siège de montage **(126)** capable de monter l'adaptateur **(120)** à au moins un du pôle **(100)** et une des une ou plusieurs têtes interchangeables **(130)** et la seconde extrémité **(124)** a un élément d'accouplement femelle **(150)** ;
dans lequel le pôle **(100)** peut être monté de manière amovible dans/sur le sol, peut être fixé à un support, une balustrade ou toute autre surface ;
le manchon **(128)** est monté mobile sur la partie de corps **(140),**
l'adaptateur **(120)** comprend un contour de verrouillage **(142),** dans lequel un mouvement du manchon **(128)** permet la polarisation du contour de verrouillage **(142)** afin de désaccoupler sélectivement et d'accoupler de manière non amovible le pôle **(100)** et une des une ou plusieurs têtes interchangeables **(130)** ; et
dans lequel l'accouplement du pôle **(100)** et une des une ou plusieurs têtes interchangeables **(130)** implique un accouplement de l'élément d'accouplement femelle **(150)** avec un élément d'accouplement mâle **(170),** où l'élément d'accouplement mâle **(170)** comporte au moins un renfoncement **(152)** ou au moins une saillie **(152)** adapté(e) pour accoupler sélectivement le contour de verrouillage **(142),** et
dans lequel une des une ou plusieurs têtes interchangeables **(130),** ou le pôle **(100)** comporte l'élément d'accouplement mâle **(170).**

2. Ensemble selon la revendication **1,** dans lequel une des une ou plusieurs têtes interchangeables **(130)** est un appareil d'éclairage.

3. Ensemble selon la revendication **1,** dans lequel une des une ou plusieurs têtes interchangeables **(130)** est un article décoratif.
